(19) Europäisches Patentamt / European Patent Office / Office européen des brevets

(11) **EP 2 920 038 B1**

(12) **FASCICULE DE BREVET EUROPEEN**

(45) Date de publication et mention de la délivrance du brevet:
**07.06.2017 Bulletin 2017/23**

(21) Numéro de dépôt: **13803108.3**

(22) Date de dépôt: **05.11.2013**

(51) Int Cl.:
**B60W 10/06** *(2006.01)*      **B60W 10/08** *(2006.01)*
**B60W 20/10** *(2016.01)*      **B60W 30/14** *(2006.01)*
**B60W 20/00** *(2016.01)*

(86) Numéro de dépôt international:
**PCT/FR2013/052631**

(87) Numéro de publication internationale:
**WO 2014/076387 (22.05.2014 Gazette 2014/21)**

(54) **PROCÉDÉ ET DISPOSITIF DE CONTRÔLE DES COUPLES DE MOTEURS THERMIQUE ET AUXILIAIRE(S) D'UN VÉHICULE HYBRIDE, EN PRÉSENCE D'UN INCRÉMENT DE CONSIGNE**

VERFAHREN UND VORRICHTUNG ZUR STEUERUNG DER DREHMOMENTE EINES VERBRENNUNGSMOTORS UND HILFSMOTOR (S) EINES HYBRIDFAHRZEUGS IN GEGENWART EINES SOLLWERTANSTIEGS

METHOD AND DEVICE FOR CONTROLLING THE TORQUES OF THE COMBUSTION ENGINE AND AUXILIARY MOTOR(S) OF A HYBRID VEHICLE, IN THE PRESENCE OF A SETPOINT INCREMENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.11.2012 FR 1260777**

(43) Date de publication de la demande:
**23.09.2015 Bulletin 2015/39**

(73) Titulaire: **Peugeot Citroën Automobiles SA**
**78140 Vélizy Villacoublay (FR)**

(72) Inventeurs:
• **HECKETSWEILER, Thierry**
  **F-92600 Asnieres Sur Seine (FR)**
• **MENET, Benoit**
  **F-92210 St Cloud (FR)**

(56) Documents cités:
**EP-A- 1 531 074      EP-A- 2 008 901**
**FR-A- 2 828 444      US-A1- 2005 192 734**
**US-A1- 2011 035 135**

EP 2 920 038 B1

## Description

L'invention concerne les véhicules qui sont dits hybrides du fait qu'ils comportent un groupe motopropulseur comprenant un moteur thermique et au moins un moteur (ou machine) auxiliaire associé à des moyens de stockage d'énergie, et plus précisément le contrôle de l'utilisation des moteurs thermique et auxiliaire(s) de tels véhicules hybrides.

On entend ici par « moteur auxiliaire » un moteur électrique ou hydraulique ou à air comprimé capable de fournir du couple à partir de l'énergie qui est stockée dans des moyens de stockage d'énergie, comme par exemple une batterie. EP 1 531 074 décrit un procédé de contrôle de l'utilisation des moteurs thermique et auxiliaire d'un groupe motopropulseur d'un véhicule hybride muni d'un système de contrôle de vitesse à consigne de vitesse programmable, consistant à déterminer

i) un couple de confort nécessaire à une accélération de confort dudit véhicule en fonction d'une vitesse en cours du véhicule, d'une consigne de vitesse programmée du système, puis

ii) des premier et second couples de consigne respectivement pour lesdits moteurs thermique et auxiliaire en fonction dudit couple de confort déterminé, d'un couple maximal assuré par ledit moteur thermique d'un couple de consigne demandé par ledit système pour faire converger la vitesse en cours du véhicule vers ladite consigne de vitesse programmée. Certains véhicules hybrides, éventuellement de type automobile, comportent un système de contrôle de vitesse chargé d'assurer une fonction de régulateur de vitesse et/ou une fonction de limiteur de vitesse. Ce type de système est notamment chargé, une fois activé et programmé avec une consigne de vitesse par le conducteur d'un véhicule, de déterminer pour les moteurs thermique et auxiliaire(s) des couples permettant à leur groupe motopropulseur de faire converger (ou tendre) la vitesse en cours du véhicule vers cette consigne de vitesse programmée.

Le moteur thermique fournit un premier couple (principal) qui est utilisé seul tant que le couple total, que le groupe motopropulseur doit fournir pour faire tendre la vitesse en cours du véhicule vers la consigne de vitesse programmée, demeure inférieur à son couple maximal. Si ce couple total devient supérieur au couple maximal offert par le moteur thermique suite à un incrément de la consigne de vitesse programmée, on utilise le moteur auxiliaire pour fournir en complément un second couple (auxiliaire) qui est généralement fonction de la quantité d'énergie qui est disponible dans les moyens de stockage d'énergie à l'instant considéré. Lorsque cette quantité d'énergie disponible devient sensiblement nulle, le moteur auxiliaire ne peut plus fournir de second couple et donc la prestation du système de contrôle de vitesse est dégradée (ce qui se traduit par une augmentation notable de la durée de convergence), voire non remplie (ce qui se traduit par une impossibilité de convergence).

L'invention a donc notamment pour but d'améliorer la situation.

Elle propose notamment à cet effet un procédé, d'une part, dédié au contrôle de l'utilisation des moteurs thermique et auxiliaire(s) d'un groupe motopropulseur d'un véhicule hybride muni d'un système de contrôle de vitesse à consigne de vitesse programmable, et, d'autre part, consistant à déterminer un couple de confort nécessaire à une accélération de confort du véhicule en fonction de la vitesse en cours du véhicule, d'une consigne de vitesse programmée du système et de forces de résistance subies par le véhicule, puis des premier et second couples de consigne respectivement pour les moteurs thermique et auxiliaire(s) en fonction de ce couple de confort déterminé, de couples maximal et optimal assurés par le moteur thermique, d'un couple maximal assuré par le moteur auxiliaire et d'un couple de consigne demandé par le système pour faire converger la vitesse en cours du véhicule vers la consigne de vitesse programmée.

Ainsi, lorsque le système de contrôle de vitesse a été activé et qu'un incrément de la consigne de vitesse programmée a été requis, on peut effectuer un contrôle de l'utilisation des moteurs thermique et auxiliaire(s) qui est propre à optimiser la consommation d'énergie fossile (carburant) sans dégradation de prestation.

Le procédé de contrôle selon l'invention peut comporter d'autres caractéristiques qui peuvent être prises séparément ou en combinaison, et notamment :

- on peut déterminer les forces de résistance subies par le véhicule en fonction de la vitesse en cours du véhicule et du couple en cours qui est fourni par le groupe motopropulseur ;

  ➢ les forces de résistance subies par le véhicule peuvent être égales à la somme d'un effort aérodynamique subi par le véhicule, d'un effort lié à la pente d'une voie sur laquelle circule le véhicule, et d'un effort de roulement du véhicule sur cette voie ;

- on peut déterminer l'accélération de confort du véhicule en fonction de la vitesse en cours du véhicule et de la consigne de vitesse programmée du système ;
- le premier couple de consigne déterminé peut être égal au minimum entre le couple optimal assuré par le moteur thermique et le couple de consigne demandé par le système, et le second couple de consigne déterminé peut être égal à zéro, lorsque le couple optimal assuré par le moteur thermique est supérieur ou égal au couple de confort déterminé ;
- lorsque le couple optimal assuré par le moteur thermique est inférieur au couple de confort déterminé, on peut déterminer une énergie auxiliaire nécessaire devant être fournie par le moteur auxiliaire pour faire converger la vitesse en cours du véhicule vers la consigne de vitesse programmée, puis on peut déterminer si cette énergie auxiliaire nécessaire déterminée est inférieure ou égale à une énergie maximale auxiliaire en cours qui est à la disposition du moteur auxiliaire ;

➢ lorsque l'énergie auxiliaire nécessaire déterminée est inférieure ou égale à l'énergie maximale auxiliaire en cours, le premier couple de consigne déterminé peut être égal au couple optimal assuré par le moteur thermique, et le second couple de consigne déterminé peut être égal au résultat de la soustraction entre le couple de confort déterminé et le premier couple de consigne déterminé ;

➢ lorsque l'énergie auxiliaire nécessaire déterminée est supérieure à l'énergie maximale auxiliaire en cours, on peut déterminer un couple auxiliaire propre à faire converger la vitesse en cours du véhicule vers la consigne de vitesse programmée selon un couple constant du moteur auxiliaire, puis on peut déterminer si le résultat de la somme du couple auxiliaire déterminé et du couple maximal assuré par le moteur thermique est supérieur ou égal au couple de confort ;

• lorsque le résultat de la somme du couple auxiliaire déterminé et du couple maximal assuré par le moteur thermique est supérieur ou égal au couple de confort, le second couple de consigne déterminé peut être égal au couple auxiliaire déterminé, et le premier couple de consigne déterminé peut être égal au résultat de la soustraction entre le couple de confort déterminé et le second couple de consigne déterminé ;

• lorsque le résultat de la somme du couple auxiliaire déterminé et du couple maximal assuré par le moteur thermique est inférieur au couple de confort, le premier couple de consigne déterminé peut être égal au couple maximal assuré par le moteur thermique, et le second couple de consigne déterminé peut être égal au couple auxiliaire déterminé.

L'invention propose également un dispositif, d'une part, dédié au contrôle de l'utilisation des moteurs thermique et auxiliaire(s) d'un véhicule hybride à système de contrôle de vitesse à consigne de vitesse programmable, et, d'autre part, agencé pour déterminer un couple de confort nécessaire à une accélération de confort du véhicule en fonction de la vitesse en cours du véhicule, d'une consigne de vitesse programmée du système et de forces de résistance subies par le véhicule, puis des premier et second couples de consigne respectivement pour les moteurs thermique et auxiliaire(s) en fonction de ce couple de confort déterminé, de couples maximal et optimal assurés par le moteur thermique, d'un couple maximal assuré par le moteur auxiliaire et d'un couple de consigne demandé par le système pour faire converger la vitesse en cours du véhicule vers la consigne de vitesse programmée.

L'invention propose également un véhicule hybride, éventuellement de type automobile, et comprenant des moteurs thermique et auxiliaire(s), un système de contrôle de vitesse à consigne de vitesse programmable, et un dispositif de contrôle du type de celui présenté ci-avant.

D'autres caractéristiques et avantages de l'invention apparaîtront à l'examen de la description détaillée ci-après, et des dessins annexés, sur lesquels:

- la figure 1 illustre schématiquement et fonctionnellement un véhicule hybride comprenant un groupe motopropulseur, un système de contrôle de vitesse et un superviseur de groupe motopropulseur équipé d'un dispositif de contrôle selon l'invention,
- la figure 2 illustre un exemple d'algorithme propre à mettre en oeuvre un procédé de contrôle selon l'invention,
- la figure 3 illustre un exemple d'algorithme propre à mettre en oeuvre l'étape de détermination des premier et second couples d'un procédé de contrôle selon l'invention,
- la figure 4 illustre des premiers exemples de diagrammes d'évolution temporelle de couples, de vitesse de véhicule et de niveau d'énergie auxiliaire (SOE) intervenant dans le procédé de contrôle selon l'invention lorsqu'une première situation survient,
- la figure 5 illustre des premiers exemples de diagrammes d'évolution temporelle de couples, de vitesse de véhicule et de niveau d'énergie auxiliaire (SOE) intervenant dans le procédé de contrôle selon l'invention lorsqu'une deuxième situation survient,
- la figure 6 illustre des premiers exemples de diagrammes d'évolution temporelle de couples, de vitesse de véhicule et de niveau d'énergie auxiliaire (SOE) intervenant dans le procédé de contrôle selon l'invention lorsqu'une troisième situation survient,
- la figure 7 illustre des premiers exemples de diagrammes d'évolution temporelle de couples, de vitesse de véhicule et de niveau d'énergie auxiliaire (SOE) intervenant dans le procédé de contrôle selon l'invention lorsqu'une quatrième situation survient, et
- la figure 8 illustre des premiers exemples de diagrammes d'évolution temporelle de couples, de vitesse de véhicule et de niveau d'énergie auxiliaire (SOE) intervenant dans le procédé de contrôle selon l'invention lorsqu'une cinquième situation survient.

L'invention a pour but de proposer un procédé de contrôle, et le dispositif de contrôle D associé, destinés à permettre le contrôle de l'utilisation des moteurs auxiliaire(s) MA et thermique MT d'un groupe motopropulseur d'un véhicule hybride V à système de contrôle de vitesse SC.

Dans ce qui suit, on considère, à titre d'exemple non limitatif, que le véhicule hybride V est de type automobile. Il s'agit par exemple d'une voiture. Mais l'invention n'est pas limitée à ce type de véhicule hybride. Elle concerne en effet tout type de véhicule hybride terrestre ou maritime (ou fluvial) ou encore aéronautique, disposant d'un groupe motopropulseur comprenant au moins un moteur thermique MT et au moins un moteur (ou machine) auxiliaire MA couplé à des moyens de stockage d'énergie MS.

Par ailleurs, on considère dans ce qui suit, à titre d'exemple non limitatif, que le moteur (ou machine) auxiliaire MA est un moteur électrique. Mais l'invention n'est pas limitée à ce type de moteur (ou machine) auxiliaire. Elle concerne en effet tout type de moteur (ou machine) auxiliaire capable de fournir du couple à partir de l'énergie qui est stockée dans des moyens de stockage d'énergie. Ainsi, elle concerne également les moteurs hydrauliques ou à air comprimé. Du fait du choix précité, les moyens de stockage d'énergie MS se présentent par exemple sous la forme d'une batterie rechargeable.

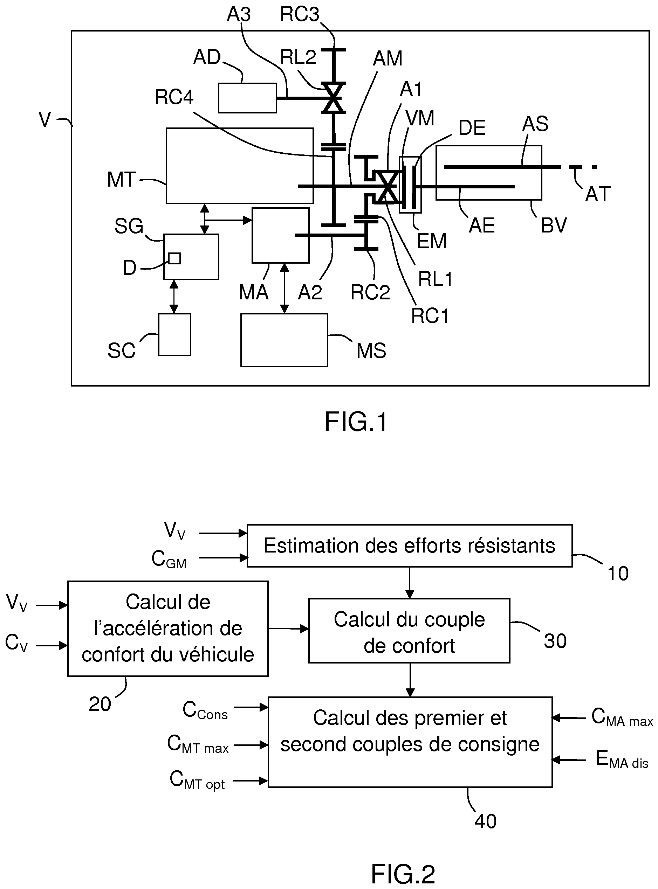

On a schématiquement représenté sur la figure 1 un véhicule hybride V comprenant un groupe motopropulseur à roue libre, un superviseur SG propre à superviser le fonctionnement du groupe motopropulseur, et un dispositif de contrôle D selon l'invention.

Le groupe motopropulseur comprend, ici, un moteur thermique MT, un arbre moteur AM, au moins un moteur auxiliaire (ici électrique) MA, une boite de vitesses BV, un embrayage principal EM, un arbre d'entraînement A1, et une roue libre principale RL1 montée entre le moteur thermique MT et la boite de vitesses BV.

Dans l'exemple non limitatif de la figure 1 la roue libre principale RL1 est installée entre le moteur thermique MT et l'embrayage principal EM. Mais dans une variante de réalisation (non représentée) la roue libre principale RL1 pourrait être installé entre l'embrayage principal EM et la boîte de vitesses BV.

Le moteur thermique MT comprend un vilebrequin (non représenté) qui est solidarisé fixement à l'arbre moteur AM afin d'entraîner ce dernier (AM) en rotation.

La boîte de vitesses BV comprend au moins un arbre d'entrée (ou primaire) AE et un arbre de sortie AS destinés à être couplés l'un à l'autre. L'arbre d'entrée AE est destiné à recevoir le couple moteur via l'embrayage principal EM. L'arbre de sortie AS est destiné à recevoir le couple moteur via l'arbre d'entrée AE afin de le communiquer à l'arbre de transmission AT auquel il est couplé et qui est couplé indirectement aux roues du véhicule V. L'arbre d'entrée AE et l'arbre de sortie AS comprennent chacun des pignons (non représentés) qui sont destinés à participer ensemble de façon sélective à la définition des différentes vitesses sélectionnables de la boîte de vitesses BV.

On notera que la boîte de vitesses BV peut être automatisée ou non. Par conséquent, il pourra s'agir d'une boîte automatique, d'une boîte de vitesses manuelle pilotée ou non, ou d'une boîte de vitesses à double embrayage (ou DCT).

Dans l'exemple non limitatif de la figure 1, l'embrayage EM comprend notamment un volant moteur VM qui est solidarisé fixement à l'arbre d'entraînement A1 et un disque d'embrayage DE qui est solidarisé fixement à l'arbre d'entrée AE. Par ailleurs, un premier pignon ou une première roue de couplage RC1 est solidarisée fixement à l'arbre d'entraînement A1 et engrène un deuxième pignon ou une deuxième roue de couplage RC2 qui est solidarisée fixement à un arbre A2 qui peut être entraîné en rotation par le moteur auxiliaire MA. De plus, la roue libre principale RL1 constitue un embrayage secondaire de type tout rien, qui comprend notamment une première bague (non représentée) qui est solidarisée fixement à l'arbre moteur AM et une seconde bague (non représentée) qui est destinée à être couplée étroitement à l'arbre d'entraînement A1 lors de chaque verrouillage de la roue libre principale RL1. La roue libre principale RL1 est donc ici propre à coupler les arbres moteur AM et d'entraînement A1, et l'embrayage principale EM est propre à coupler les arbres d'entraînement A1 et d'entrée AE.

On notera que dans l'exemple non limitatif illustré sur la figure 1, le groupe motopropulseur comprend également une machine électrique AD qui constitue, par exemple, un alterno-démarreur chargé notamment de lancer le moteur thermique MT afin de lui permettre de démarrer, y compris en présence d'un système de contrôle d'arrêt et de redémarrage automatique (ou « stop and start »). Cet alterno-démarreur AD est chargé d'entraîner en rotation un arbre de rotor (ou d'induit) A3 qui est ici solidarisé à une roue libre secondaire RL2 destinée à être couplée sur ordre à un troisième pignon ou une troisième roue de couplage RC3 qui engrène de façon permanente un quatrième pignon ou une quatrième roue de couplage RC4 solidarisé(e) fixement à l'arbre moteur AM.

Les fonctionnements du moteur thermique MT, du moteur auxiliaire MA et de l'alterno-démarreur AD sont contrôlés par le superviseur SG qui peut se présenter sous la forme d'un calculateur (de préférence dédié).

Le système de contrôle de vitesse SC est un régulateur de vitesse et/ou un limiteur de vitesse. Il est notamment chargé, lorsqu'il est activé par le conducteur du véhicule V et qu'il a été programmé avec une consigne de vitesse $C_V$, de déterminer pour le groupe motopropulseur une accélération de consigne $A_{Cons}$ en fonction de cette consigne de vitesse $C_V$ et de la vitesse en cours $V_V$ du véhicule V. On comprendra que chaque accélération de consigne $A_{Cons}$ est déterminée de manière à faire tendre la vitesse en cours $V_V$ du véhicule V vers la consigne de vitesse $C_V$ programmée par le conducteur. Ce système (de contrôle de vitesse) SC se présente par exemple sous la forme d'un calculateur (éventuellement dédié).

Comme indiqué précédemment, l'invention propose de mettre en oeuvre dans le véhicule V un procédé de contrôle destiné, lorsque le système (de contrôle de vitesse) SC est activé, à permettre un contrôle automatique de l'utilisation des moteurs thermique MT et auxiliaire(s) MA de sorte que la consigne de vitesse $C_V$ programmée soit respectée au mieux, notamment en présence d'un incrément (ou d'un rappel) de la consigne de vitesse $C_V$.

Un tel procédé peut être mis en oeuvre par le dispositif de contrôle D. Dans l'exemple non limitatif illustré sur la figure 1, le dispositif de contrôle D fait partie du superviseur SG. Mais cela n'est pas obligatoire. Ce dispositif (de contrôle) D pourrait en effet être un équipement qui est couplé au superviseur SG, directement ou indirectement. Par conséquent, le dispositif de contrôle D peut être réalisé sous la forme de modules logiciels (ou informatiques ou encore « software »), ou bien d'une combinaison de circuits électroniques (ou « hardware ») et de modules logiciels.

Le procédé de contrôle, selon l'invention, consiste tout d'abord à déterminer un couple de confort $C_{conf}$ nécessaire à une accélération de confort $A_{conf}$ du véhicule V en fonction de la vitesse en cours $V_V$ du véhicule V, de la consigne de vitesse programmée $C_V$ du système SC et de forces de résistance $F_{res}$ qui sont subies par le véhicule V.

On notera que les forces de résistance (ou efforts résistants) $F_{res}$ peuvent être avantageusement déterminées au début de la première étape (i) en fonction de la vitesse en cours $V_V$ du véhicule V et du couple en cours $C_{GM}$ qui est fourni par le groupe motopropulseur à l'instant considéré. La vitesse en cours $V_V$ et le couple en cours $C_{GM}$ sont connus du superviseur SG éventuellement via l'ordinateur de bord du véhicule.

Par exemple, les forces de résistance $F_{res}$ sont égales à la somme d'un effort aérodynamique $F_{aérodynamique}$ subi par le véhicule V, d'un effort $F_{pente}$ lié à la pente de la voie sur laquelle circule le véhicule V, et d'un effort de roulement $F_{roulement}$ du véhicule V sur cette voie. Comme le sait l'homme de l'art, tous ces efforts sont déterminés à chaque instant par certains calculateurs du véhicule V (par exemple celui du moteur, notamment pour les estimateurs de pente pour prépositionner les régulateurs) en fonction de la vitesse en cours $V_V$ et du couple en cours $C_{GM}$.

L'accélération de confort $A_{conf}$ peut, par exemple, être déterminée en fonction de la vitesse en cours $V_V$ du véhicule V et de la consigne de vitesse programmée $C_V$ du système SC, et plus précisément en fonction de la vitesse en cours $V_V$ et de l'écart entre la consigne de vitesse $C_V$ et la vitesse en cours $V_V$. A cet effet, on peut par exemple utiliser une table de correspondance prédéfinie (et donc stockée dans le dispositif de contrôle D). On notera que cette accélération de confort $A_{conf}$ doit correspondre à l'accélération limite au-delà de laquelle la prestation de suivi de la consigne de vitesse $C_V$ n'est plus jugée acceptable.

La relation entre le couple de confort $C_{conf}$, l'accélération de confort $A_{conf}$ et les forces de résistance $F_{res}$ peut être déduite du principe fondamentale de la dynamique : $M.A_{conf} = \Sigma forces$,
où M est la masse du véhicule V et $\Sigma forces$ est la somme des forces qui sont appliquées au véhicule V à l'instant considéré, laquelle est donnée par la relation :

$$\sum forces = \frac{C_{conf}}{R} + F_{res} ,$$

où R est le rayon des roues du véhicule V.

Au final on obtient :

$$\boxed{C_{conf} = M * R * A_{conf} - R * F_{res}}.$$

Le procédé de contrôle, selon l'invention, consiste également à déterminer des premier C1 et second C2 couples de consigne respectivement pour les moteurs thermique MT et auxiliaire MA en fonction au moins du couple de confort $C_{conf}$ précédemment déterminé, du couple maximal (théorique) $C_{MT\,max}$ et du couple optimal (maximal) $C_{MT\,opt}$ assurés par le moteur thermique MT, du couple maximal $C_{MA\,max}$ assuré par le moteur auxiliaire MA, et d'un couple de consigne $C_{Cons}$ qui a été demandé par le système SC pour faire converger la vitesse en cours $V_V$ du véhicule V vers la consigne de vitesse programmée $C_V$.

On notera que le couple de consigne $C_{Cons}$ est fonction de l'accélération de consigne $A_{Cons}$ demandée par le système SC pour faire converger la vitesse en cours $V_V$ du véhicule V vers la consigne de vitesse programmée $C_V$. On effectue en fait une simple conversion.

On a schématiquement illustré sur la figure 2 un exemple d'algorithme propre à mettre en oeuvre le procédé de contrôle selon l'invention.

Cet algorithme débute dans une étape 10 consécutivement à une demande d'incrément (ou de rappel) de la consigne de vitesse $C_V$. Dans cette étape 10, on (le dispositif D) estime les efforts résistants $F_{res}$ en fonction de la vitesse en cours $V_V$ du véhicule V et du couple en cours $C_{GM}$ qui est fourni par le groupe motopropulseur à l'instant considéré.

Puis, dans une deuxième étape 20 on (le dispositif D) calcule une accélération de confort $A_{conf}$ en fonction de la vitesse en cours $V_V$ du véhicule V et de l'écart entre la consigne de vitesse $C_V$ et la vitesse en cours $V_V$.

Puis, dans une troisième étape 30 on (le dispositif D) calcule un couple de confort $C_{conf}$ en fonction de l'accélération de confort $A_{conf}$ calculée à l'étape 20 et des efforts résistants $F_{res}$ calculés à l'étape 10.

Enfin, dans une quatrième étape 40 on (le dispositif D) calcule des premier C1 et second C2 couples de consigne respectivement pour les moteurs thermique MT et auxiliaire MA en fonction au moins du couple de confort $C_{conf}$ précédemment déterminé, des couples maximal $C_{MT\,max}$ et optimal $C_{MT\,opt}$ assurés par le moteur thermique MT, du couple maximal $C_{MA\,max}$ assuré par le moteur auxiliaire MA, et du couple de consigne $C_{Cons}$ demandé par le système SC pour faire converger la vitesse en cours $V_V$ du véhicule V vers la consigne de vitesse programmée $C_V$, ainsi que de préférence de l'énergie $E_{MA\,dis}$ qui est disponible dans les moyens de stockage d'énergie MS (ici une batterie).

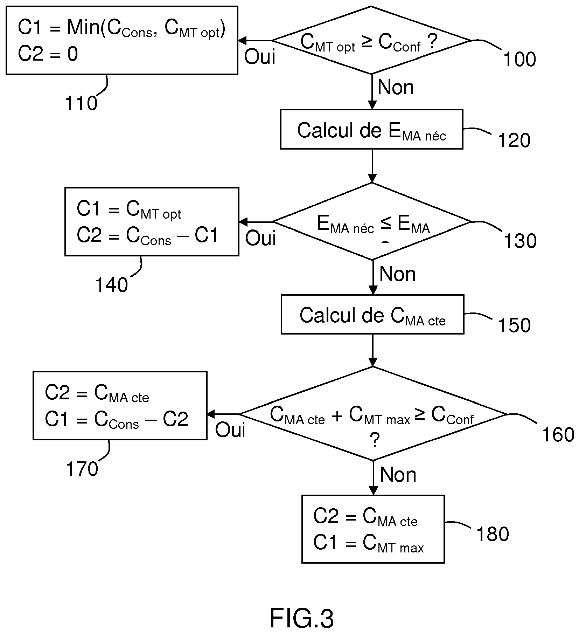

Le calcul des premier C1 et second C2 couples de consigne peut par exemple être effectué par le dispositif D par la mise en oeuvre d'un algorithme du type de celui qui est illustré sur la figure 3, à titre d'exemple purement illustratif.

Cet exemple d'algorithme commence par une étape 100 dans laquelle on (le dispositif D) effectue un test destiné à comparer le couple optimal $C_{MT\,opt}$ assuré par le moteur thermique MT au couple de confort $C_{conf}$ préalablement déterminé (voir étape 30 de l'algorithme de la figure 2).

Si le couple optimal $C_{MT\,opt}$ assuré par le moteur thermique MT est supérieur ou égal au couple de confort déterminé $C_{conf}$ (soit $C_{MT\,opt} \geq C_{conf}$) alors on effectue une étape 110 dans laquelle on (le dispositif D) peut prendre comme valeur de premier couple de consigne C1 (du moteur thermique MT) la valeur la plus petite entre le couple optimal $C_{MT\,opt}$ et le couple de consigne $C_{Cons}$ demandé par le système SC (soit $C1 = \min (C_{MT\,opt}, C_{Cons})$), et comme valeur de second couple de consigne C2 (du moteur auxiliaire MA) la valeur nulle (soit C2 = 0).

On notera que cette étape 110 peut être remplacée par deux sous-étapes associées respectivement au cas où le couple optimal $C_{MT\,opt}$ est supérieur au couple de confort $C_{conf}$ (soit $C_{MT\,opt} > C_{conf}$) et au cas où le couple optimal $C_{MT\,opt}$ est égal au couple de confort $C_{conf}$ (soit $C_{MT\,opt} = C_{conf}$).

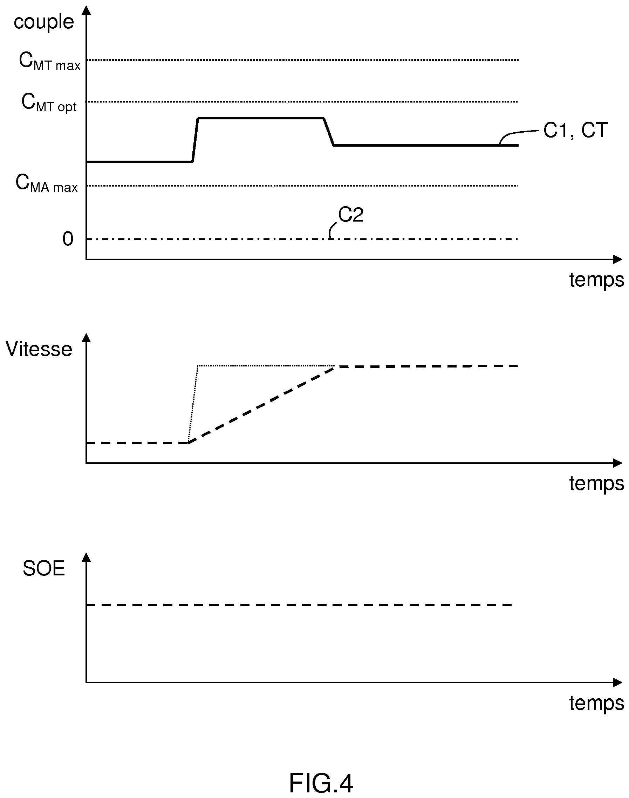

Le cas $C_{MT\,opt} > C_{conf}$ correspond à la première situation illustrée par les diagrammes d'évolution temporelle de la figure 4. Le couple optimal $C_{MT\,opt}$ du moteur thermique MT permet ici d'assurer le couple de confort $C_{conf}$ qui correspond à l'accélération de confort $A_{conf}$ et le couple de consigne $C_{Cons}$ demandé par le système SC. Le moteur thermique MT fournit alors intégralement le couple total CT (= C1 + C2) qui est nécessaire à la régulation de vitesse (soit C1 = CT et C2 = 0).

On notera que dans les diagrammes d'évolution temporelle de couple des figures 4 à 8 le premier couple C1 est matérialisé par une ligne en tirets, le couple total CT (du groupe motopropulseur) est matérialisé par une ligne en trait continu, et le second couple C2 est matérialisé par une ligne en tirets points. Par ailleurs, dans les diagrammes d'évolution temporelle de vitesse des figures 4 à 8 la vitesse en cours $V_V$ du véhicule V est matérialisée par une ligne en tirets, et la consigne de vitesse $C_V$ définie par le conducteur est matérialisée par une ligne en pointillés. Enfin, dans les diagrammes d'évolution temporelle de l'énergie disponible dans les moyens de stockage d'énergie MS (ou SOE - « State Of Energy ») des figures 4 à 8 la SOE est matérialisée par une ligne en tirets.

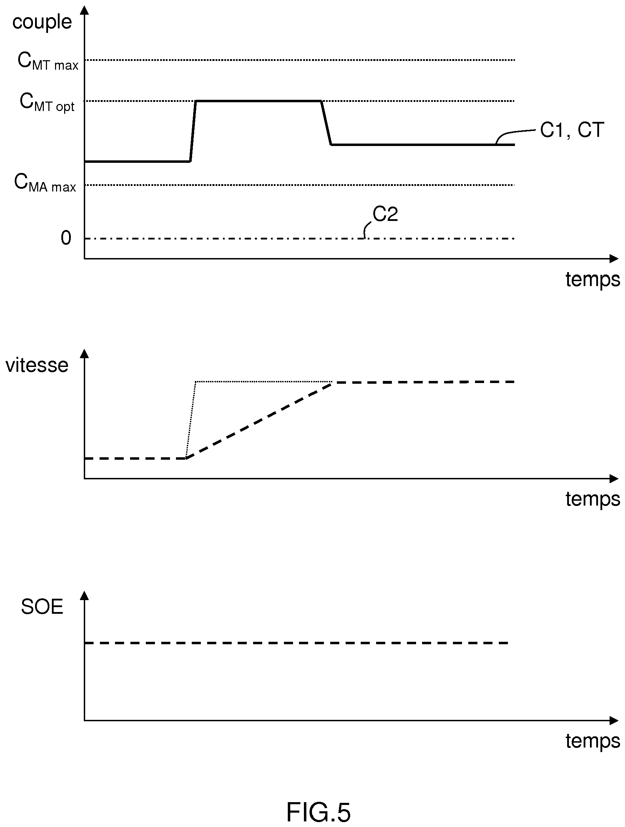

Le cas $C_{MT\,opt} = C_{conf}$ correspond à la deuxième situation illustrée par les diagrammes d'évolution temporelle de la figure 5. Le couple optimal $C_{MT\,opt}$ du moteur thermique MT permet ici d'assurer le couple de confort $C_{conf}$ qui correspond à l'accélération de confort $A_{conf}$ mais pas le couple de consigne $C_{Cons}$ qui est demandé par le système SC. Le moteur thermique MT fournit alors son couple optimal $C_{MT\,opt}$, lequel est intégralement le couple total CT nécessaire à la régulation de vitesse (soit $C1 = C_{MT\,opt} = CT$, C2 = 0). Cela se fait sans dégradation du rendement du moteur thermique MT, mais avec une accélération du véhicule V qui est comprise entre l'accélération de consigne Acons demandée par le système SC et l'accélération de confort $A_{conf}$.

Si le couple optimal $C_{MT\,opt}$ assuré par le moteur thermique MT est inférieur au couple de confort déterminé $C_{conf}$ (soit $C_{MT\,opt} < C_{conf}$) alors on effectue une étape 120 dans laquelle on (le dispositif D) peut déterminer une énergie auxiliaire nécessaire $E_{MA\,néc}$ devant être fournie par le moteur auxiliaire MA pour faire converger la vitesse en cours $V_V$ du véhicule V vers la consigne de vitesse programmée $C_V$.

Ensuite, dans une étape 130, on peut effectuer un test pour déterminer si cette énergie auxiliaire nécessaire déterminée $E_{MA\,néc}$ est inférieure ou égale à une énergie maximale auxiliaire en cours $E_{MA\,dis}$ qui est à la disposition du moteur auxiliaire MA (et stockée dans les moyens de stockage d'énergie MS).

Si l'énergie auxiliaire nécessaire déterminée $E_{MA\,néc}$ est inférieure ou égale à l'énergie maximale auxiliaire en cours $E_{MA\,dis}$ (soit $E_{MA\,néc} \leq E_{MA\,dis}$) alors on peut effectuer une étape 140 dans laquelle on (le dispositif D) peut prendre comme valeur de premier couple de consigne C1 (du moteur thermique MT) la valeur du couple optimal $C_{MT\,opt}$ qui est assuré par le moteur thermique MT (soit $C1 = C_{MT\,opt}$), et comme valeur de second couple de consigne C2 (du moteur auxiliaire MA) la valeur du résultat de la soustraction entre le couple de confort déterminé $C_{conf}$ et le premier couple de consigne déterminé C1 (soit C2 = $C_{conf}$ - C1).

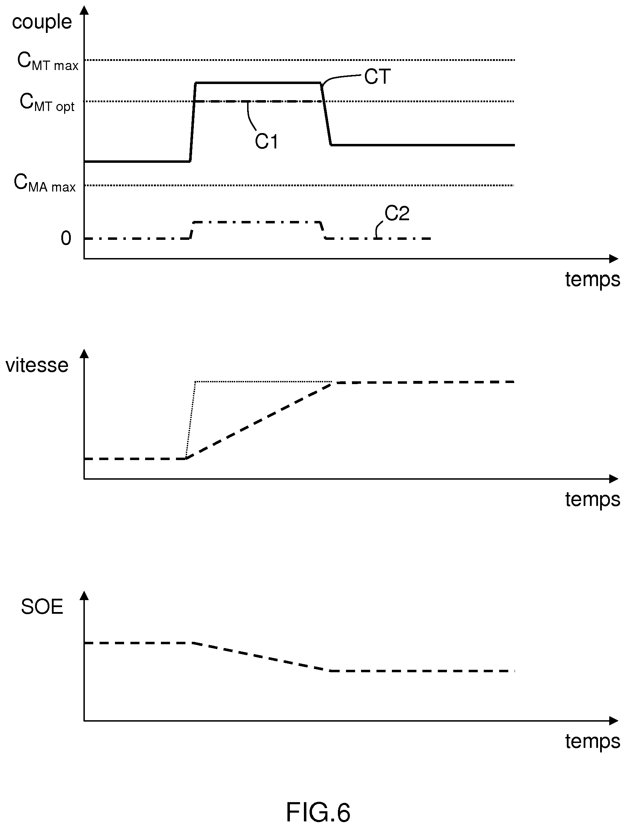

Le cas $E_{MA\,néc} \leq E_{MA\,dis}$ correspond à la troisième situation illustrée par les diagrammes d'évolution temporelle de la figure 6. Le couple optimal $C_{MT\,opt}$ du moteur thermique MT ne permet pas ici d'assurer le couple de confort $C_{conf}$ qui correspond à l'accélération de confort $A_{conf}$. Le moteur thermique MT fournit alors une partie (C1) du couple total CT (= C1 + C2) qui est nécessaire à la régulation de vitesse, et le moteur auxiliaire MA fournit la partie complémentaire (C2) de ce couple total CT grâce à l'énergie qui est stockée dans les moyens de stockage d'énergie MS. Cela permet d'assurer l'accélération de confort $A_{conf}$ sur toute la phase de prise de vitesse.

Si l'énergie auxiliaire nécessaire déterminée $E_{MA\,néc}$ est supérieure à l'énergie maximale auxiliaire en cours $E_{MA\,dis}$ (soit $E_{MA\,néc} > E_{MA\,dis}$) alors on peut effectuer une étape 150 dans laquelle on (le dispositif D) peut déterminer un couple auxiliaire $C_{MA\,cte}$ qui est propre à faire converger la vitesse en cours $V_V$ du véhicule V vers la consigne de vitesse programmée $C_V$ selon un couple constant du moteur auxiliaire MA.

Ensuite, dans une étape 160, on peut effectuer un test pour déterminer si le résultat de la somme du couple auxiliaire déterminé $C_{MA\,cte}$ et du couple maximal $C_{MT\,max}$ assuré par le moteur thermique MT est supérieur ou égal au couple de confort $C_{conf}$ (soit $C_{MA\,cte} + C_{MT\,max} \geq C_{conf}$ ?).

Si le résultat de cette somme ($C_{MA\,cte} + C_{MT\,max}$) est supérieur ou égal au couple de confort $C_{conf}$ (soit $C_{MA\,cte} + C_{MT\,max} \geq C_{conf}$), alors on peut effectuer une étape 170 dans laquelle on (le dispositif D) peut prendre comme valeur de second couple de consigne C2 (du moteur auxiliaire MA) la valeur du couple auxiliaire déterminé $C_{MA\,cte}$, et comme valeur de premier couple de consigne C1 (du moteur thermique MT) la valeur du résultat de la soustraction entre le couple de confort déterminé $C_{conf}$ et le second couple de consigne déterminé C2 (soit C1 = $C_{conf}$ - C2).

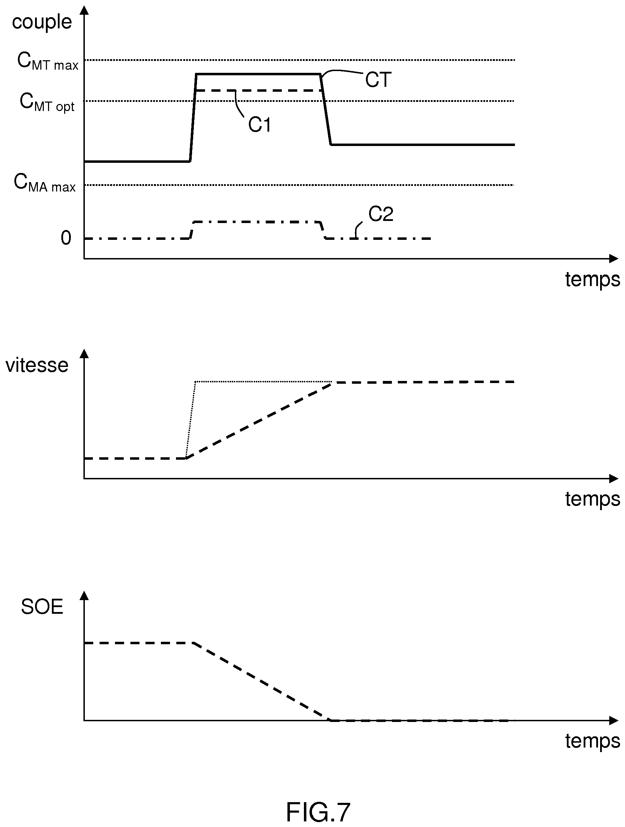

Le cas $C_{MA\,cte} + C_{MT\,max} \geq C_{conf}$ correspond à la quatrième situation illustrée par les diagrammes d'évolution temporelle de la figure 7. Le couple optimal $C_{MT\,opt}$ du moteur thermique MT ne permet pas ici d'assurer le couple de confort $C_{conf}$ qui correspond à l'accélération de confort $A_{conf}$. Le moteur thermique MT fournit alors une partie (C1) du couple total CT (= C1 + C2) qui est nécessaire à la régulation de vitesse, et le moteur auxiliaire MA fournit la partie complémentaire (C2) de ce couple total CT grâce à l'énergie qui est stockée dans les moyens de stockage d'énergie MS et qui est utilisée au mieux (second couple C2 constant sur toute la phase d'accélération). Cela permet d'assurer l'accélération de confort $A_{conf}$ sur toute la phase de prise de vitesse mais avec une dégradation du rendement du moteur thermique MT du fait que ce dernier (MT) fournit un premier couple C1 supérieur à son couple optimal $C_{MT\,opt}$.

Si le résultat de la somme ($C_{MA\,cte} + C_{MT\,max}$) est inférieur au couple de confort $C_{conf}$ (soit $C_{MA\,cte} + C_{MT\,max} < C_{conf}$), alors on peut effectuer une étape 180 dans laquelle on (le dispositif D) peut prendre comme valeur de second couple de consigne C2 (du moteur auxiliaire MA) la valeur du couple auxiliaire déterminé $C_{MA\,cte}$ (soit C2 = $C_{MA\,cte}$), et comme valeur de premier couple de consigne C1 (du moteur thermique MT) la valeur du couple maximal $C_{MT\,max}$ assuré par le moteur thermique MT (soit C1 = $C_{MT\,max}$).

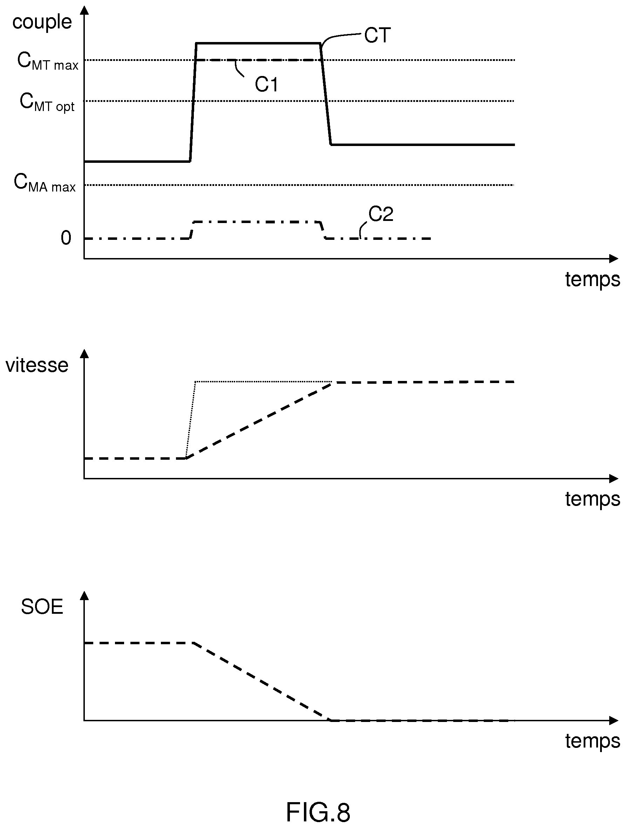

Le cas $C_{MA\,cte} + C_{MT\,max} < C_{conf}$ correspond à la cinquième situation illustrée par les diagrammes d'évolution temporelle de la figure 8. Le couple optimal $C_{MT\,opt}$ du moteur thermique MT ne permet pas ici d'assurer le couple de confort $C_{conf}$ qui correspond à l'accélération de confort $A_{conf}$. Le moteur thermique MT fournit alors une partie (C1) du couple total CT (= C1 + C2) qui est nécessaire à la régulation de vitesse, et le moteur auxiliaire MA fournit la partie complémentaire (C2) de ce couple total CT grâce à l'énergie qui est stockée dans les moyens de stockage d'énergie MS et qui est utilisée au mieux (second couple C2 constant sur toute la phase d'accélération). Cependant, dans cette situation, on ne peut pas assurer l'accélération de confort $A_{conf}$ sur toute la phase de prise de vitesse. En effet, le moteur thermique MT fournit un premier couple C1 égal à son couple maximal $C_{MT\,max}$ pour apporter le maximum d'accélération, sans que cela ne permette de respecter l'accélération de confort $A_{conf}$. Le rendement du moteur thermique MT est donc ici également dégradé.

Grâce à l'invention, lorsque le système de contrôle de vitesse a été activé, on peut désormais réaliser un pilotage optimisé de l'utilisation des moteurs auxiliaire(s) et thermique, au moins sur le plan de la consommation d'énergie fossile (ou carburant), et sans dégradation notable de prestation.

**Revendications**

1. Procédé de contrôle de l'utilisation des moteurs thermique (MT) et auxiliaire (MA) d'un groupe motopropulseur d'un véhicule hybride (V) muni d'un système de contrôle de vitesse (SC) à consigne de vitesse programmable, le procédé consistant à déterminer i) un couple de confort nécessaire à une accélération de confort dudit véhicule (V) en fonction d'une vitesse en cours du véhicule (V), d'une consigne de vitesse programmée du système (SC) et de forces de résistance subies par ledit véhicule (V), puis ii) des premier et second couples de consigne respectivement pour lesdits moteurs thermique (MT) et auxiliaire (MA) en fonction dudit couple de confort déterminé, de couples maximal et optimal assurés par ledit moteur thermique (MT), d'un couple maximal assuré par ledit moteur auxiliaire (MA) et d'un couple de consigne demandé par ledit système (SC) pour faire converger la vitesse en cours du véhicule (V) vers ladite consigne de vitesse programmée.

2. Procédé selon la revendication 1, **caractérisé en ce que** l'on détermine lesdites forces de résistance subies par le véhicule (V) en fonction de ladite vitesse en cours du véhicule (V) et dudit couple en cours fourni par ledit groupe motopropulseur.

3. Procédé selon la revendication 2, **caractérisé en ce que** lesdites forces de résistance subies par le véhicule (V) sont égales à la somme d'un effort aérodynamique subi par ledit véhicule (V), d'un effort lié à la pente d'une voie sur laquelle circule ledit véhicule (V), et d'un effort de roulement dudit véhicule (V) sur ladite voie.

**4.** Procédé selon l'une des revendications 1 à 3, **caractérisé en ce que** l'on détermine ladite accélération de confort dudit véhicule (V) en fonction de ladite vitesse en cours du véhicule (V) et de ladite consigne de vitesse programmée du système (SC).

**5.** Procédé selon l'une des revendications 1 à 4, **caractérisé en ce que** ledit premier couple de consigne déterminé est égal au minimum entre ledit couple optimal assuré par le moteur thermique (MT) et ledit couple de consigne demandé par ledit système (SC), et ledit second couple de consigne déterminé est égal à zéro, lorsque ledit couple optimal assuré par le moteur thermique (MT) est supérieur ou égal audit couple de confort déterminé.

**6.** Procédé selon l'une des revendications 1 à 5, **caractérisé en ce que**, lorsque ledit couple optimal assuré par le moteur thermique (MT) est inférieur audit couple de confort déterminé, on détermine une énergie auxiliaire nécessaire devant être fournie par ledit moteur auxiliaire (MA) pour faire converger la vitesse en cours du véhicule (V) vers ladite consigne de vitesse programmée, puis on détermine si cette énergie auxiliaire nécessaire déterminée est inférieure ou égale à une énergie maximale auxiliaire en cours à la disposition dudit moteur auxiliaire (MA).

**7.** Procédé selon la revendication 6, **caractérisé en ce que** ledit premier couple de consigne déterminé est égal audit couple optimal assuré par le moteur thermique (MT), et ledit second couple de consigne déterminé est égal au résultat d'une soustraction entre ledit couple de confort déterminé et ledit premier couple de consigne déterminé, lorsque ladite énergie auxiliaire nécessaire déterminée est inférieure ou égale à ladite énergie maximale auxiliaire en cours.

**8.** Procédé selon l'une des revendications 6 et 7, **caractérisé en ce que**, lorsque ladite énergie auxiliaire nécessaire déterminée est supérieure à ladite énergie maximale auxiliaire en cours, on détermine un couple auxiliaire propre à faire converger ladite vitesse en cours du véhicule (V) vers ladite consigne de vitesse programmée selon un couple constant dudit moteur auxiliaire (MA), puis on détermine si le résultat de la somme dudit couple auxiliaire déterminé et dudit couple maximal assuré par ledit moteur thermique (MT) est supérieur ou égal audit couple de confort.

**9.** Procédé selon la revendication 8, **caractérisé en ce que** ledit second couple de consigne déterminé est égal audit couple auxiliaire déterminé, et ledit premier couple de consigne déterminé est égal au résultat d'une soustraction entre ledit couple de confort déterminé et ledit second couple de consigne déterminé, lorsque ledit résultat de la somme dudit couple auxiliaire déterminé et dudit couple maximal assuré par ledit moteur thermique (MT) est supérieur ou égal audit couple de confort.

**10.** Procédé selon l'une des revendications 8 et 9, **caractérisé en ce que** ledit premier couple de consigne déterminé est égal audit couple maximal assuré par ledit moteur thermique (MT), et ledit second couple de consigne déterminé est égal audit couple auxiliaire déterminé, lorsque ledit résultat de la somme dudit couple auxiliaire déterminé et dudit couple maximal assuré par ledit moteur thermique (MT) est inférieur audit couple de confort.

**11.** Dispositif (D) de contrôle de l'utilisation des moteurs thermique (MT) et auxiliaire (MA) d'un groupe motopropulseur d'un véhicule hybride (V) muni d'un système de contrôle de vitesse (SC) à consigne de vitesse programmable, le dispositif étant agencé pour déterminer i) un couple de confort nécessaire à une accélération de confort dudit véhicule (V) en fonction d'une vitesse en cours du véhicule (V), d'une consigne de vitesse programmée du système (SC) et de forces de résistance subies par ledit véhicule (V), puis ii) des premier et second couples de consigne respectivement pour lesdits moteurs thermique (MT) et auxiliaire (MA) en fonction dudit couple de confort déterminé, de couples maximal et optimal assurés par ledit moteur thermique (MT), d'un couple maximal assuré par ledit moteur auxiliaire (MA) et d'un couple de consigne demandé par ledit système (SC) pour faire converger la vitesse en cours du véhicule (V) vers ladite consigne de vitesse programmée.

**12.** Véhicule hybride (V) comprenant des moteurs thermique (MT) et auxiliaire (MA) et un système de contrôle de vitesse (SC) à consigne de vitesse programmable, **caractérisé en ce qu'**il comprend en outre un dispositif de contrôle (D) selon la revendication 11.

**Patentansprüche**

**1.** Verfahren zur Steuerung der Verwendung der Brennkraftmaschine (MT) und des Hilfsmotors (MA) eines Antriebsaggregats eines Hybridfahrzeugs (V), das mit einem Geschwindigkeitssteuersystem (SC) mit programmierbaren Geschwindigkeitssollwert versehen ist, wobei das Verfahren darin besteht, i) ein Komfortdrehmoment, das für eine Komfortbeschleunigung des Fahrzeugs (V) erforderlich ist, in Abhängigkeit von einer aktuellen Geschwindigkeit des Fahrzeugs (V), von einem programmierten Geschwindigkeitssollwert des Systems (SC) und Widerstandskräften, die das Fahrzeug (V) erfährt, zu bestimmen, dann ii) ein erstes und ein zweites Solldrehmoment jeweils für die Brennkraftmaschine (MT) und den Hilfsmotor (MA) in Abhängigkeit von dem bestimmten Komfortdrehmoment, dem maximalen und optimalen Drehmoment, das von der Brennkraftmaschine (MT) sichergestellt wird, einem maximalen Drehmoment, das von dem Hilfsmotor (MA) sichergestellt wird, und einem Solldrehmoment, das von dem System (SC) gefordert wird, um die aktuelle Geschwindigkeit des Fahrzeugs (V) zu der programmierten Sollgeschwindigkeit konvergieren zu lassen.

2. Verfahren nach Anspruch 1, **dadurch gekennzeichnet, dass** man die Widerstandskräfte, die das Fahrzeug (V) in Abhängigkeit von der aktuellen Geschwindigkeit des Fahrzeugs (V) und von dem aktuellen Drehmoment das von dem Antriebsaggregat geliefert wird, erfährt, bestimmt.

3. Verfahren nach Anspruch 2, **dadurch gekennzeichnet, dass** die Widerstandskräfte, die das Fahrzeug (V) erfährt, gleich der Summe einer aerodynamischen Kraft, die das Fahrzeug (V) erfährt, einer Kraft im Zusammenhang mit dem Gefälle einer Fahrbahn, auf der das Fahrzeug (V) fährt, und einer Fahrkraft des Fahrzeugs (V) auf der Bahn sind.

4. Verfahren nach einem der Ansprüche 1 bis 3, **dadurch gekennzeichnet, dass** man die Komfortbeschleunigung des Fahrzeugs (V) in Abhängigkeit von der aktuellen Geschwindigkeit des Fahrzeugs (V) und dem programmierten Geschwindigkeitssollwert (SC) des Fahrzeugs bestimmt.

5. Verfahren nach einem der Ansprüche 1 bis 4, **dadurch gekennzeichnet, dass** das erste bestimmte Solldrehmoment gleich dem Minimum zwischen dem optimalen Drehmoment, das von der Brennkraftmaschine (MT) sichergestellt wird, und dem von dem System (SC) geforderten Solldrehmoment ist, und das zweite bestimmte Solldrehmoment gleich null ist, wenn das optimale Drehmoment, das von der Brennkraftmaschine (MT) sichergestellt wird, größer oder gleich dem bestimmten Komfortdrehmoment ist.

6. Verfahren nach einem der Ansprüche 1 bis 5, **dadurch gekennzeichnet, dass** man, wenn das optimale Drehmoment, das von der Brennkraftmaschine (MT) sichergestellt wird, kleiner ist als das bestimmte Komfortdrehmoment, eine erforderliche Hilfsenergie bestimmt, die von dem Hilfsmotor (MA) geliefert werden muss, um die aktuelle Geschwindigkeit des Fahrzeugs (V) zu dem programmierten Geschwindigkeitssollwert konvergieren zu lassen, man dann bestimmt, ob diese bestimmte erforderliche Hilfsenergie kleiner oder gleich einer aktuellen maximalen Hilfsenergie, die dem Hilfsmotor (MA) zur Verfügung steht, ist.

7. Verfahren nach Anspruch 6, **dadurch gekennzeichnet, dass** das erste festgelegte Solldrehmoment gleich dem optimalen Drehmoment ist, das von der Brennkraftmaschine (MT) sichergestellt wird, und das zweite bestimmte Solldrehmoment gleich dem Resultat einer Subtraktion zwischen dem bestimmten Komfortdrehmoment und dem bestimmten ersten Solldrehmoment ist, wenn die bestimmte erforderliche Hilfsenergie kleiner oder gleich der aktuellen maximalen Hilfsenergie ist.

8. Verfahren nach einem der Ansprüche 6 und 7, **dadurch gekennzeichnet, dass** man, wenn die bestimmte erforderliche Hilfsenergie größer ist als die aktuelle maximale Hilfsenergie, ein Hilfsdrehmoment bestimmt, das geeignet ist, um die aktuelle Geschwindigkeit des Fahrzeugs (V) zu der programmierten Sollgeschwindigkeit gemäß einem konstanten Drehmoment des Hilfsmotors (MA) konvergieren zu lassen, man dann bestimmt, ob das Resultat der Summe des bestimmten Hilfsdrehmoments und des maximalen Drehmoments, das von der Brennkraftmaschine (MT) sichergestellt wird, größer oder gleich dem Komfortdrehmoment ist.

9. Verfahren nach Anspruch 8, **dadurch gekennzeichnet, dass** das zweite bestimmte Solldrehmoment gleich dem bestimmten Hilfsdrehmoment ist, und dass das bestimmte erste Solldrehmoment gleich dem Resultat einer Subtraktion zwischen dem bestimmten Komfortdrehmoment und dem zweiten bestimmten Solldrehmoment ist, wenn das Resultat der Summe des bestimmten Hilfsdrehmoments und des maximalen Drehmoments, das von der Brennkraftmaschine (MT) sichergestellt wird, größer oder gleich dem Komfortdrehmoment ist.

10. Verfahren nach einem der Ansprüche 8 und 9, **dadurch gekennzeichnet, dass** das erste bestimmte Solldrehmoment gleich dem maximalen Drehmoment, das von der Brennkraftmaschine (MT) sichergestellt wird, ist, und dass das bestimmte zweite Solldrehmoment gleich dem bestimmten Hilfsdrehmoment ist, wenn das Resultat der Summe des bestimmten Hilfsdrehmoments und des maximalen Drehmoments, das von der Brennkraftmaschine (MT) sichergestellt wird, kleiner ist als das Komfortdrehmoment.

11. Vorrichtung (D) zum Steuern der Verwendung der Brennkraftmaschine (MT) und des Hilfsmotors (MA) eines Antriebsaggregats eines Hybridfahrzeugs (V), das mit einem Geschwindigkeitssteuersystem (SC) mit programmierbarer Sollgeschwindigkeit versehen ist, wobei die Vorrichtung eingerichtet ist, um i) ein Komfortdrehmoment, das für eine Komfortbeschleunigung des Fahrzeugs (V) erforderlich ist, in Abhängigkeit von einer aktuellen Geschwindigkeit des Fahrzeugs (V), einer programmierten Sollgeschwindigkeit des Systems (SC) und den Widerstandskräften, die das Fahrzeug (V) erfährt, zu bestimmen, dann ii) jeweils das erste und das zweite Solldrehmoment für die Brennkraftmaschine (MT) und den Hilfsmotor (MA) in Abhängigkeit von dem bestimmten Komfortdrehmoment, dem maximalen und optimalen Drehmoment, das von der Brennkraftmaschine (MT) sichergestellt wird, und einem Solldrehmoment, das von dem System (SC) gefordert wird, um die aktuelle Geschwindigkeit des Fahrzeugs (V) zu der programmierten Sollgeschwindigkeit konvergieren zu lassen.

12. Hybridfahrzeug (V), das eine Brennkraftmaschine (MT) und einen Hilfsmotor (MA) sowie ein Geschwindigkeitssteuersystem (SC) mit programmierbarem Sollwert umfasst, **dadurch gekennzeichnet, dass** es außerdem eine Steuervorrichtung (D) nach Anspruch 11 umfasst.

**Claims**

1. A method for controlling the use of the combustion engine (MT) and auxiliary motor(s) (MA) of a powertrain of a hybrid vehicle (V) provided with a speed control system (SC) with programmable speed setpoint, the method consisting in determining i) a comfortable torque needed for a comfortable acceleration of said vehicle (V) as a function of a current speed of the vehicle (V), a programmed speed setpoint of the system (SC) and resistive forces experienced by said vehicle (V), then ii) first and second setpoint torques respectively for said combustion engine (MT) and auxiliary motor (MA), as a function of said determined comfortable torque, of maximum and optimum torques provided by said combustion engine (MT), of a maximum torque provided by said auxiliary motor (MA), and of a setpoint torque demanded by said system (SC) so as to cause the current speed of the vehicle (V) to converge towards said programmed speed setpoint.

2. The method according to Claim 1, **characterized in that** said resistive forces experienced by the vehicle (V) are determined as a function of said current speed of the vehicle (V) and of said current torque provided by said powertrain.

3. The method according to Claim 2, **characterized in that** said resistive forces experienced by the vehicle (V) are equal to the sum of an aerodynamic force experienced by said vehicle (V), of a force linked to the gradient of a path on which said vehicle (V) is travelling, and of a rolling force of said vehicle (V) on said path.

4. The method according to one of Claims 1 to 3, **characterized in that** said comfortable acceleration of said vehicle (V) is determined as a function of said current speed of the vehicle (V) and of said programmed speed setpoint of the system (SC).

5. The method according to one of Claims 1 to 4, **characterized in that** said determined first setpoint torque is equal to the minimum between said optimum torque provided by the combustion engine (MT) and said setpoint torque demanded by said system (SC), and said determined second setpoint torque is equal to zero, when said optimum torque provided by the combustion engine (MT) is greater than or equal to said determined comfortable torque.

6. The method according to one of Claims 1 to 5, **characterized in that**, when said optimum torque provided by the combustion engine (MT) is less than said determined comfortable torque, a necessary auxiliary energy is determined which is to be supplied by said auxiliary motor (MA) so as to cause the current speed of the vehicle (V) to converge towards said programmed speed setpoint, then it is determined whether this determined necessary auxiliary energy is less than or equal to a maximum current auxiliary energy at the disposal of said auxiliary motor (MA).

7. The method according to Claim 6, **characterized in that** said first determined setpoint torque is equal to said optimum torque provided by the combustion engine (MT), and said second determined setpoint torque is equal to the result of a subtraction between said determined comfortable torque and said first determined setpoint torque, when said determined necessary auxiliary energy is less than or equal to said current maximum auxiliary energy.

8. The method according to one of Claims 6 and 7, **characterized in that**, when said determined necessary auxiliary energy is greater than said current maximum auxiliary energy, an auxiliary torque is determined which is suitable to cause said current speed of the vehicle (V) to converge towards said programmed speed setpoint according to a constant torque of said auxiliary motor (MA), then it is determined whether the result of the sum of said determined auxiliary torque and of said maximum torque provided by said combustion engine (MT) is greater than or equal to said comfortable torque.

9. The method according to Claim 8, **characterized in that** said second determined setpoint torque is equal to said determined auxiliary torque, and said first determined setpoint torque is equal to the result of a subtraction between said determined comfortable torque and said second determined setpoint torque when said result of the sum of said determined auxiliary torque and of said maximum torque provided by said combustion engine (MT) is greater than or equal to said comfortable torque.

10. The method according to one of Claims 8 and 9, **characterized in that** said first determined setpoint torque is equal to said maximum torque provided by said combustion engine (MT), and said second determined setpoint torque is equal to said determined auxiliary torque, when said result of the sum of said determined auxiliary torque and of said maximum torque provided by said combustion engine (MT) is less than said comfortable torque.

11. A device (D) for controlling the use of the combistion engine (MT) and auxiliary motor(s) (MA) of a powertrain of a hybrid vehicle (V) provided with a speed control system (SC) with programmable speed setpoint, the device being arranged to determine i) a comfortable torque needed for a comfortable acceleration of said vehicle (V) as a function of a current speed of the vehicle (V), a programmed speed setpoint of the system (SC) and resistive forces experienced by said vehicle (C), then ii) first and second setpoint torques respectively for said combustion engine (MT) and auxiliary motor (MA), as a function of said determined comfortable torque, of maximum and optimum torques provided by said combustion engine (MT), of a maximum torque provided by said auxiliary motor (MA), and of a setpoint torque demanded by said system (SC) so as to cause the current speed of the vehicle (V) to converge towards said programmed speed setpoint.

12. A hybrid vehicle (V) including a combustion engine (MT) and auxiliary motor (MA) and a speed control system (SC) with programmable speed setpoint, **characterized in that** it further includes a control device (D) according to Claim 11.

FIG.1

FIG.2

$$C1 = Min(C_{Cons}, C_{MT\,opt})$$
$$C2 = 0$$

110

$$C_{MT\,opt} \geq C_{Conf}\ ?$$  100

Oui

Non

Calcul de $E_{MA\,néc}$  120

$$C1 = C_{MT\,opt}$$
$$C2 = C_{Cons} - C1$$

140

$$E_{MA\,néc} \leq E_{MA}$$  130

Oui

Non

Calcul de $C_{MA\,cte}$  150

$$C2 = C_{MA\,cte}$$
$$C1 = C_{Cons} - C2$$

170

$$C_{MA\,cte} + C_{MT\,max} \geq C_{Conf}\ ?$$  160

Oui

Non

$$C2 = C_{MA\,cte}$$
$$C1 = C_{MT\,max}$$  180

FIG.3

FIG.4

FIG.5

FIG.6

couple

$C_{MT\,max}$

$C_{MT\,opt}$

CT

C1

$C_{MA\,max}$

0

C2

temps

vitesse

temps

SOE

temps

FIG.7

FIG.8

**EP 2 920 038 B1**

**RÉFÉRENCES CITÉES DANS LA DESCRIPTION**

**Documents brevets cités dans la description**

- EP 1531074 A